# EUROPEAN PATENT SPECIFICATION

(11) **EP 2 102 307 B1**
(45) Date of publication and mention of the grant of the patent: **23.05.2012**
(21) Application number: 07858190.7
(22) Date of filing: 28.12.2007
(51) Int. Cl.: C09K 9/02, G01N 31/22

(54) **PHOTOSTABILIZED TIME TEMPERATURE INDICATOR**
FOTOSTABILISIERTER ZEITTEMPERATURINDIKATOR
INDICATEUR TEMPS-TEMPÉRATURE PHOTOSTABILISÉ

(30) Priority: 11.01.2007 EP 07100411
(43) Date of publication of application: 23.09.2009
(73) Proprietor: Freshpoint Holdings SA, 2300 La Chaux-de-Fonds (CH)
(72) Inventor: TENETOV, Elena, Nesher 36848 (IL); SALMAN, Husein, 12440 Golan Heights (IL); ASSOUS, Julien, 63241 Tel Aviv (IL); FEILER, Leonhard, 79589 Binzen (DE); RAIMANN, Thomas, CH-4334 Sisseln (CH)
(74) Representative: Bernhardt, Wolfgang Willy-Hans
(86) International application number: PCT/EP2007/064594
(87) International publication number: WO 2008/083925

(56) References cited:
- WO-A-2005/075978
- US-A- 5 710 420
- EDUARDO A G L S ET AL: "PHOTORESPONSIVE POLYURETHANE-ACRYLATE BLOCK COPOLYMERS. I. PHOTOCHROMIC EFFECTS IN COPOLYMERS CONTAINING 6 -NITRO SPIROPYRANES AND 6 -NITRO-BIS-SPIROPYRANES" JOURNAL OF APPLIED POLYMER SCIENCE, JOHN WILEY AND SONS INC. NEW YORK, US, vol. 71, no. 2, 10 January 1999 (1999-01-10), pages 259-266, XP000822809 ISSN: 0021-8995
- TOPCHIYEV D A: "PHOTOCHROMISM OF SPIROPYRANS IN POLYMERIC MEDIA. SOME ASPECTS AND POSSIBILITIES OF REGULATING THE SPECTRAL-KINETIC CHARACTERISTICS. REVIEW*" POLYMER SCIENCE USSR, PERGAMON PRESS LTD. OXFORD, GB, vol. 32, no. 12, January 1990 (1990-01), pages 2361-2383, XP000244248
- SMETS G J, THOEN J, AERTS A: "Some photochemical reactions in solid polymer systems" J. POLYMER SCI.: SYMPOSIUM NO 51, 1975, pages 119-134, XP002433823

## Description

The present invention relates to time-temperature indicator (TTI) systems comprising substituted spiroaromatic compounds with increased photostability as active material. The invention also relates to a method of manufacturing such a time-temperature indicator comprising the steps of (a) embedding in or atop a matrix said indicator compound; and (b) inducing the formation of a metastable state of said embedded indicator compound.

Time-temperature indicators, TTIs, are substrates for packaging of or attachment to perishable goods that are capable of reporting the partial or full time temperature history of any good to which it is thermally coupled.

Temperature abuse is one of the most frequently observed causes for predated goods spoilage. It is therefore important and desired to monitor the time-temperature history of such perishable goods, preferably, using inexpensive and consumer friendly means. Time temperature indicators are substances that are capable of visually reporting on the summary of the time temperature history of the substance, and consequently, of the perishable good it is associated with. Designed for the end user, time temperature indicators are usually designed to report a clear and visual Yes/No signal.

WO 99/39197 describes the use of photochromic dyes, based on a transfer reaction and embedded in the crystalline state, as active materials for TTIs. TTIs based on these materials are highly accurate and reproducible and can be charged using stimulating light. It further teaches that by placing a special filter atop the active substance most of the UV and visible spectrum of light can be filtered which prevents undesired re-charging of the TTI.

WO 2005/075978 also teaches TTIs based on photochromic indicator compounds. Specifically disclosed is

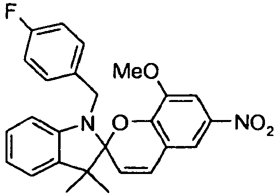

TTIs based on a photochromic indicator compound should, ideally, not be affected by surrounding light. Although there is a large selection of suitable filter systems, there is still a need for photochromic indicators which are improved in terms of photostability because existing filters cannot ensure complete protection against photobleaching and/or photodegradation of the indicator compound.

The problem underlying the present invention is therefore to provide a time-temperature indicator system having an increased photostability and which can furthermore allow the monitoring of the temperature of more and of less perishable products.

A novel time-temperature indicator (TTI) system that is based on specifically substituted spiroaromatic compounds as active material solves the above referenced problem.

A first embodiment of the present invention therefore relates to a time temperature indicator for indicating a temperature change over time, comprising at least one spiropyran indicator of formula (I) 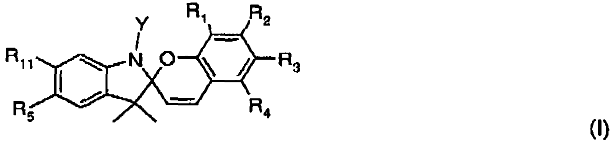 wherein
- R₁: is -C₁-C₈ alkoxy, halogen, -C₁-C₆ alkyl or -NO₂;
- R₂: is hydrogen or -C₁-C₆ alkoxy;
- R₃: is NO₂ or halogen;
- R₄: is hydrogen, -C₁-C₆ alkoxy or halogen;
- R₅: is hydrogen, halogen, -C₁-C₆ alkoxy, -COOH, -COO-C₁-C₆alkyl, -CF₃ or phenyl;
- R₁₁: hydrogen or R₁₁ and R₅ form together a phenyl ring;

- Y: is phenyl, naphthyl, anthracen-9-yl, 9H-fluoren-9-yl or a residue 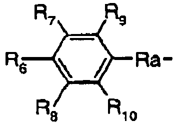
wherein
- R₆: is hydrogen, halogen, -C₁-C₆ alkoxy, -NO₂, -CF_{3,}-O-CF₃, -CN, -COO-C₁-C₆alkyl, phenyl or biphenyl, 9H-fluoren-9-yl ;
- R₇: is hydrogen, halogen, -CN, -C₁-C₆ alkoxy or R₇ and R₆ form together a phenyl ring;
- R₈: is hydrogen, halogen, -CN, or -C₁-C₆ alkoxy;
- R₉: is hydrogen or halogen or CN.
- R₁₀: is hydrogen or halogen or CN.
- R₈: is -(CH₂)n- with n = 1-6 or -CH₂-CH=CH-
with the proviso that 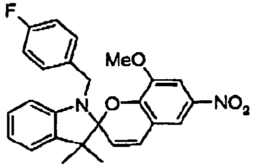 is excluded. (Claim 1)

The proviso is necessary because of the specific disclosure in WO2005/075978 (Freshpoint), compound 35 therein.

In one embodiment Y is phenyl, naphthyl, anthracen-9-yl, or 9H-fluoren-9-yl, (Claim 2) Examples are: 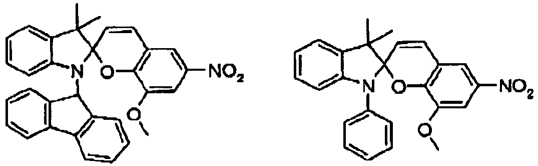 Y is preferably a residue 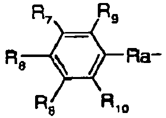 (Claim 3).

Thus, a preferred spiroaromatic indicator is a compound of the formula (II) 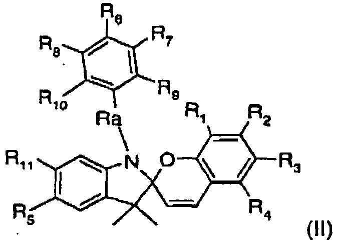 wherein
- R₁: is -C₁-C₆ alkoxy, halogen, -C₁-C₆ alkyl or -NO₂;
- R₂: is H or -C₁-C₆ alkoxy;
- R₃: is NO₂ or halogen;
- R₄: is -C₁-C₆ alkoxy or halogen;
- R₅: is halogen, -C₁-C₆ alkoxy, -COOH, -COO-C₁-C₆alkyl, -CF₃ or phenyl;
- R₁,: hydrogen or R₁₁ and R₅ form together a phenyl ring;
- R₆: is hydrogen, halogen, -C₁-C₆ alkoxy, -NO₂, -CF₃,-O-CF₃, -CN, -COO-C₁-C₆alkyl, phenyl or biphenyl;
- R₇: is hydrogen, halogen, -CN, -C₁-C₆ alkoxy or R₇ and R₆ form together a phenyl ring;
- R₈: is hydrogen, halogen, -CN, or -C₁-C₆ alkoxy;
- R₉: is hydrogen or halogen;
- R₁₀: is hydrogen or halogen;
- Ra: is -(CH₂)n- with n = 1-6 or -CH₂-CH=CH-,
with the proviso according to claim 1.

n in Ra is preferably 1, 2 or 3, for example, -CH₂-, -(CH₂)₂-, -(CH₂)₃-; most preferred n is 1.

Examples for spiropyran indicators wherein Ra is -(CH₂)₂-, -(CH₂)₃- or -CH₂-CH=CH- are:

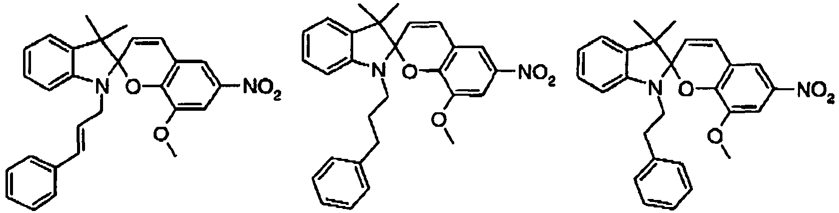

An example for a spiropyran indicator wherein R₅ and R₁₁ form a ring is:

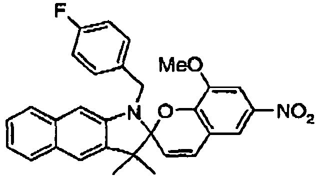

Ra is preferably CH₂, and R₁₁ is preferably H.

Thus a preferred spiropyran indicator is a compound of the formula (III) 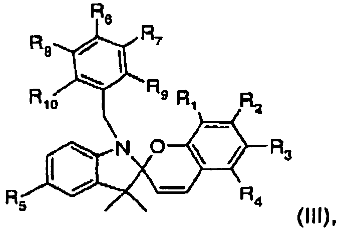 wherein
- R₁: is -C₁-C₆ alkoxy, halogen, -C₁-C₆ alkyl or -NO₂ ;
- R₂: is H or -C₁-C₆ alkoxy;
- R₃: is NO₂ or halogen;
- R₄: is hydrogen, -C₁-C₆ alkoxy or halogen;
- R₅: is halogen, -C₁-C₆ alkoxy, -COOH, -COO-C₁-C₆alkyl, -CF₃ or phenyl;
- R₆: is hydrogen, halogen, -C₁-C₆ alkoxy, -NO₂, -CF₃,-O-CF₃, -CN, -COO-C₁-C₆alkyl, phenyl, biphenyl, or 9H-fluoren-9-yl ;
- R₇: is hydrogen, halogen, -CN, -C₁-C₆ alkoxy or R₇ and R₆ form together a phenyl ring;
- R₈: is hydrogen, halogen, -CN, or -C₁-C₆ alkoxy.
- R₉: is hydrogen, halogen, -C₁-C₆ alkoxy, -NO₂, -CF_{3, .}O-CF₃, -CN, -COO-C₁-C₆alkyl, phenyl or biphenyl;
with the proviso according to claim 1. (Claim 4)

The following table shows examples of compounds of the formula (III)

| Ex. | R₅ | R₆ | R₇ | R₈ | R₉ | R₁₀ | R₁ | R₂ | R₄ | R₃ |
|---|---|---|---|---|---|---|---|---|---|---|
| 107 | Cl | Br | H | H | | | MeO | | | NO2 |
| LF 3200 | Br | Br | H | H | | | MeO | | | NO2 |
| 208 | H | Br | H | H | | | MeO | | | NO2 |
| 212 | H | Cl | H | H | | | MeO | | | NO2 |
| 349 | COOH | F | H | H | | | MeO | | | NO2 |
| 354 | COOMe | F | H | H | | | MeO | | | NO2 |
| LF3599 258 | MeO | F | H | H | | | MeO | | | NO2 |
| 231 | CF3 | F | H | H | | | MeO | | | NO2 |
| 91 | H | H | H | H | | | MeO | | | NO2 |
| 327 | H | F | H | H | | | MeO | | Br | NO2 |
| 344 | H | F | H | H | | | MeO | | MeO | NO2 |
| 331 | H | F | H | H | | | MeO | MeO | H | NO2 |
| LF3596 | phenyl | phenyl | H | H | | | MeO | | | NO2 |
| 220 | H | J | H | H | | | MeO | | | NO2 |
| 122 | H | N02 | H | H | | | MeO | | | NO2 |
| 142 | H | F | H | H | F | H | MeO | | | NO2 |
| 145 | H | MeO | H | H | | | MeO | | | NO2 |
| 150 | H | F | F | F | | | MeO | | | NO2 |
| LF3373 | H | F | F | F | F | F | MeO | | | NO2 |
| 152 | H | CF3 | H | H | | | MeO | | | NO2 |
| 258 | MeO | CF3 | H | H | | | MeO | | | NO2 |
| 337 | MeO | NO2 | H | H | | | MeO | | | NO2 |
| 351 | Cl | NO2 | H | H | | | MeO | | MeO | NO2 |
| 154 | H | -O-CF3 | H | H | | | MeO | | | NO2 |
| 276 | MeO | -O-CF3 | H | H | | | MeO | | | NO2 |
| 165 | H | CN | H | H | | | MeO | | | NO2 |
| 226 | H | H | H | H | CN | H | MeO | | | NO2 |
| 223 | H | H | CN | H | | | MeO | | | NO2 |
| 167 | H | H | H | F | F | H | MeO | | | NO2 |
| 170 | H | H | H | H | F | F | MeO | | | NO2 |
| 176 | H | F | F | H | | | MeO | | | NO2 |
| LF3404 | H | H | H | H | H | F | MeO | | | NO2 |
| 179 | H | H | F | H | F | H | MeO | | | NO2 |
| 187 | H | H | F | F | | | MeO | | | NO2 |
| 190 LF3703 | H | COOMe | H | H | | | MeO | | | NO2 |
| 197 | H | H | H | MeO | | | MeO | | | NO2 |
| 200 | H | form naphthyl together | | H | | | MeO | | | NO2 |
| 361 | H | biphenyl | H | H | | | MeO | | | NO2 |
| 203 | H | F | H | H | | | t-butyl | | | NO2 |
| 161 | H | F | H | H | | | NO2 | | | Br |
| 163 | H | F | H | H | | | N02 | | | Cl |
| 210 | H | F | H | H | | | Cl | | | F |

Halogen is F, Cl, Br or J, preferably F, Br, J, more preferably F. C₁-C₆alkyl is preferably methyl.
- R₁: is preferably methoxy and R₃ is preferably nitro.
- R₂: is preferably hydrogen or methoxy, more preferably hydrogen.
- R₄: is preferably hydrogen, methoxy or Br, more preferably hydrogen.
- R₅: is preferably hydrogen, Cl, Br, methoxy, -COOH, -COOCH₃, -CF₃ or phenyl, more preferably, hydrogen, Cl, Br, methoxy, -COOH, -COOCH₃,
- R₆: is preferably hydrogen, halogen, methoxy, -NO₂, -CF₃, -O-CF₃, -CN, -COOCH₃, phenyl or biphenyl; more preferably halogen, -NO₂, -CF₃,-O-CF₃, biphenyl.
- R₇: is preferably hydrogen, F, -CN, methoxy, more preferably, hydrogen or F.
- R₈: is preferably hydrogen, F, -CN, methoxy, more preferably, hydrogen or F.
- R₉: is preferably hydrogen, F or CN, more preferably hydrogen.
- R₁₀: is preferably hydrogen, F or CN, more preferably hydrogen.

Best results have been received with the following spiropyrans:

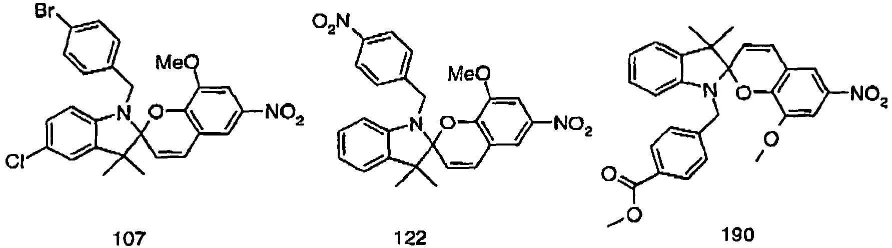

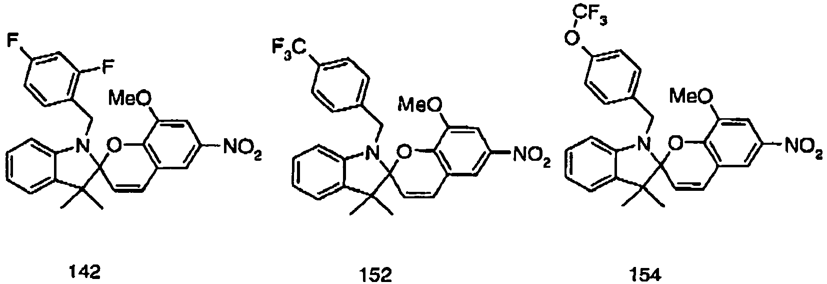

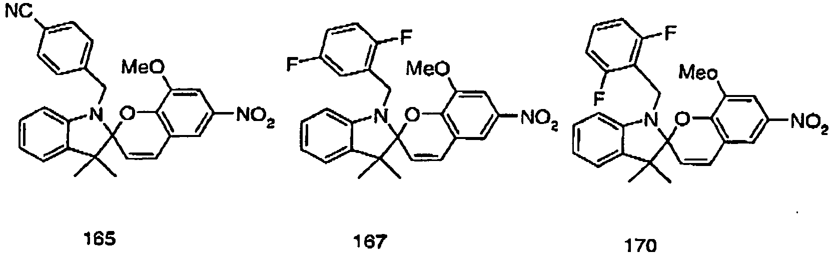

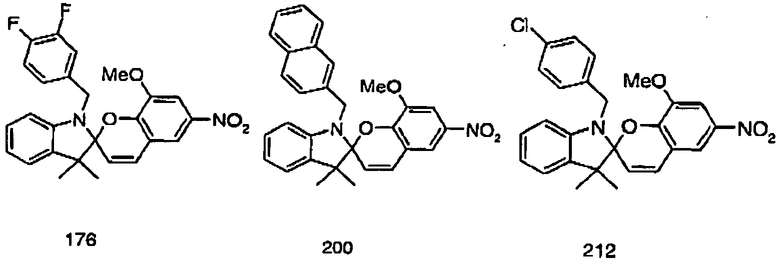

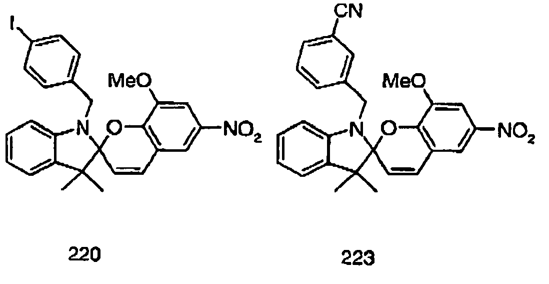

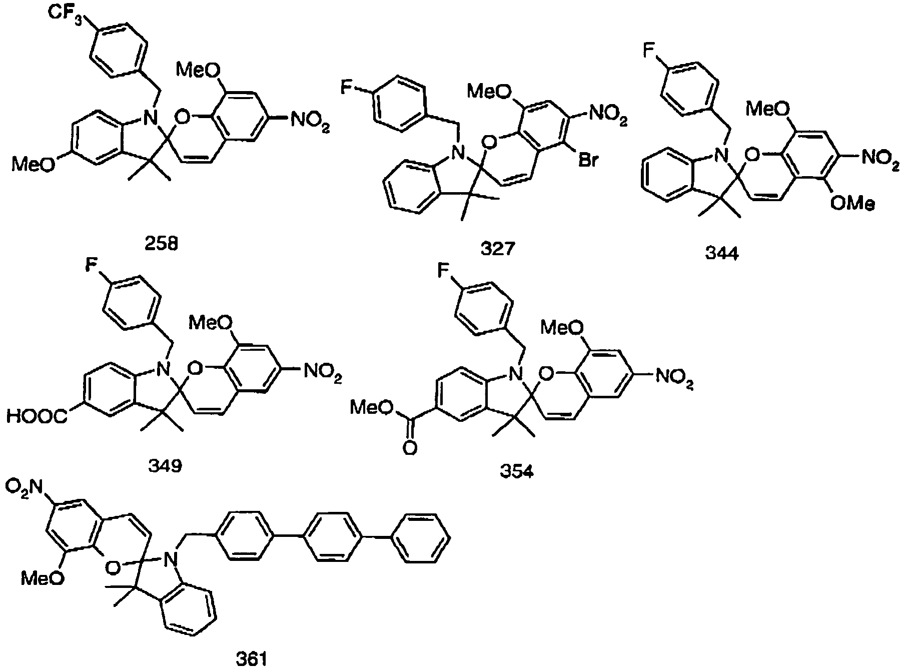

The inventive TTI relies on a spiroaromatic compound which is reversibly photochromic. By virtue of its photochromic properties, the indicator compound can undergo photo-induced coloration by irradiation with photons of a specific energy range (conversion of the second isomeric form into the first isomeric form), the coloration being followed by a time- and temperature-dependent decoloration (conversion of the first isomeric form into the second isomeric form). The coloration of the indicator compound can take place at a defined timepoint, preferably, for example, immediately after printing onto a substrate, which is especially the packaging of a perishable material.
It is preferred that the spiropyran compound as the reversibly photochromic active material of the TTI is in a crystallite form.

For example, the initially colorless indicator compound is irradiated with light, preferably UV light or near-UV light, whereupon an isomerization within the indicator compound (conversion of the second isomeric form into the first isomeric form) and an associated indicator compound coloration takes place. Such a photo-induced isomerization then proceeds as a function of time and temperature in the other direction again, so that the indicator is successively decolorized.

In each spiropyran compound exist at least two distinct isomeric forms, at least one open form and at least one cyclic isomeric form that can be converted into each other by valence isomerization:

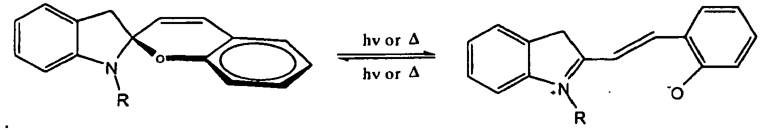

Suitable active materials exhibit the following characteristics:
(1) the system has at least one thermal process leading from one metastable state to one stable state, where the two states of the spiroaromatic are characterized by a distinctly different color and/or any other measurable physical parameter such as luminescence, refraction index, conductivity and the like.
(2) the stable state may be converted to the metastable state using one or any combination of stimuli, among others the following processes: a) photonic induction, b) thermal induction, c) pressure induction, d) electrical induction, or e) chemical induction; and
(3) other than temperature, the metastable state is substantially not affected by anyone or any combination of stimuli such as a) photo induction, b) piezo induction, c) electro induction, d) chemo induction.

The active material of the present invention maybe in the form of a crystal or a polycrystalline powder, in which the forward and reverse reactions take place or alternatively may be in a form of any other condensed phase such as a glass, a polymer solution or attached to a polymer, or in the form of a liquid or a solution.

The synthesis of the spiroaromatics used in the TTI according to the present invention, may be prepared according to synthetic routes known in the literature.

In yet another aspect of the present invention, there is provided a method for the manufacture of a TTI comprising an active material including at least one of the spiroaromatic indicator compounds described above, said method comprising the steps of
(a) embedding in or atop a matrix the spiropyran indicator of the formula (I) as defined in claim 1; and
(b) inducing the formation of at least one metastable state of said embedded spiropyran indicator. (Claim 7)

In one embodiment, the method further comprises the step of covering the time-temperature indicator with a cover support, designed to avoid photo recharging and/or photo bleaching. (Claim 8)

Depending on the specific application, a spiroaromatic compound having the required behavior may be chosen. Most of the above systems and all of the examples are characterized in that a non-colored or faintly colored thermodynamically stable state and at least one colored metastable state is used. Yet, these molecules are characterized by a relatively high optical quantum yield for the activation process turning the molecules colored and a substantially low optical quantum yield for the time and temperature dependent reaction process turning the molecules discolored. In the colored state, only negligible effect is found to any stimulus other than temperature. The activation process of the inventive TTI includes a ring opening step and the discoloration process is preferably accompanied with a ring closure.

The metastable state of the compounds used with the TTIs of the present invention may be achieved by one of the various stimuli mentioned hereinabove. In one embodiment, the metastable state is generated by photonic induction, wherein a matrix embedded with the substance is positioned or passed under a light source, emitting light of a wavelength and intensity suitable for photoexcitation, such as UV. The exposure to the light is terminated when the embedded substance changes its color to a color indicative of the formation of the metastable state at a pre-fixed quantity.

In another embodiment, the metastable state is achieved by pressure induction. In this procedure, the matrix embedded with and/or atop the substance is passed between two bodies, such as metal rolls, which apply pressure onto the surface of the matrix thereby inducing the formation of the metastable state. By adjusting the time and pressure imparted by the bodies to the active material, it is possible to control the degree of conversion from a stable state to a metastable state in the TTI active matrix.

In yet another embodiment, the metastable state is achieved by thermal induction. In this particular induction process, the matrix embedded with the substance to be induced is heated to temperatures normally below the melting point of said substance. The heat may be applied by any method known such as, but not limited to, a thermal transfer printing head. In one specific case, the heat is applied to the matrix while being passed through two heated metal rolls. In this case, the pressure applied to the surface is not capable itself of inducing the formation of the metastable state, but serves merely to ensure controlled thermal contact between the heaters and the sample. The metastable state is achieved as a result of the heat transfer from the heaters, i.e., the metal rolls, which are in contact with the matrix and the matrix itself.

However, there may be instances where the use of any combination of pressure, light and thermal inductions may be desired or necessary. It is therefore, a further embodiment of the present invention, to achieve the metastable state of the substances to be used with the TTIs of the present invention, by a combination of stimuli.

The support matrix used in the present invention may be a polymer such as PVC, PMMA, PEO polypropylene, polyethylene, all kinds of paper, all kinds of printing media or the like or any glass-like film. The active indicator may be introduced into and/or atop a matrix substrate such as polymers, glass, metals, paper, and the like, and may take on in the matrix any form that may permit reversibility of the induced chromic process. Such forms may be or result from indicator-doping of the matrix, sol-gel embedment of the indicator in the matrix, embedment of the indicator as small crystallites, solid solution and the like.

In one case, the depositing of the active material in the process of producing the TTI of the present invention is by transforming it into a printable ink that is suitable for printing using any of the printing methods known in the art, e.g., ink jet printing, flexo printing, laser printing and the like.

In another specific embodiment, the active indicator is embedded in the matrix in the form of small crystallites. In yet another specific embodiment, the active indicator is embedded in the packaging material of the goods.

The time temperature indicator according to the present invention is preferably packaged and/or attached to perishable items, especially to pharmaceuticals, biologicals or food items.

In another embodiment, the present invention also relates to a method of time temperature indication comprising the steps of
(a) forming a metastable state of at least one spiropyran indicator of the formula (I) as defined in claim 1; and
(b) adopting the original state of said at least one spiroaromatic indicator compound in a time and temperature dependent manner, wherein the formation of said original state is detected by monitoring a physical characteristic of either said metastable or original state. (Claim 9)

The adoption of said original state is visualized by a change of color based on the color difference between said metastable and original state. (Claim 10)

In a preferred embodiment of the present invention, the indicator compound as the active material of the time-temperature indicator is provided in an ink formulation, which is directly printed onto said packaging material or label. (Claim 11)

In another embodiment, the indicator compound is part of a thermal transfer (TTR) ink composition and is transferred to the printed surface by applying heat to the TTR layer.

In a specific embodiment, the present invention also relates to a method of determining the quality of ageing- and temperature-sensitive products, which comprises the following steps:
a) printing onto a substrate a time-temperature integrator which comprises at least one spiropyran indicator of the formula (I) as defined in claim 1 having photochromic properties based on an isomerization reaction,
b) activating the indicator, preferably by photo-induced coloration
c) optionally applying a protector that prevents renewed photo-induced coloration of the indicator, and
d) determining the degree of time- or temperature-induced decoloration and, taking account of the degree of decoloration, the quality of the product. (Claim 13)

When Ink-jet printing is used, the procedure is advantageously as follows:

In Step a), a time-temperature integrator comprising at least one spiropyran indicator compound as defined above, is applied by means of ink-jet printing to the substrate, especially to the packaging of ageing- and temperature-sensitive products or to labels that are applied to the packaging.

In a preferred embodiment, In Step a) it is possible additionally to apply, by means of ink-jet printing, a reference scale which reproduces the change in the color of the indicator as a function of time, and it is possible to apply, preferably in black ink, further text (or information), such as an expiry date, product identification, weight, contents etc.

Step a) is followed by Step b), activation, especially photo-induced coloration of the indicator compound. The photo-induced curing of the binder advantageously includes the photo-induced coloration of the indicator.

If desired, following Step b), an irreversible photo-sensitive indicator can be applied as tamper-proofing in the form of a covering over the time-temperature integrator. Suitable irreversible indicators include, for example, pyrrole derivatives, such as 2-phenyl-di(2-pyrrole)methane. Such a material turns irreversibly red when it is exposed to UV light.

Step c) is followed by the application of a protector, especially a color filter, which prevents renewed photo-induced coloration of the reversible indicator. In the case of UV-sensitive indicators, there come into consideration yellow filters, which are permeable only to light having typical wavelengths that are longer than 430 nm. Advantageously the protective film, that is to say the color filter, can likewise be applied by means of ink-jet printing.

Suitable filters are disclosed in the International application EP2007/060987, filed October 16, 2007. Disclosed therein is a composition comprising at least one ultraviolet light and/or visible light absorbing layer which is adhered to an underlying layer containing a photochromic colorant,
which photochromic colorant is activated by exposure to UV light to undergo a reversible color change, which color reversion occurs at a rate that is dependent on temperature, wherein the light absorbing layer comprises a binder,
from 1 to 60% by weight based on the total weight of the layer of an ultraviolet light absorber selected from the group consisting of hydroxyphenylbenzotriazole, benzophenone, benzoxazone, α-cyanoacrylate, oxanilide, tris-aryl-s-triazine, formamidine, cinnamate, malonate, benzilidene, salicylate and benzoate ultraviolet light absorbers.

The time-temperature clock can be started at a defined desired timepoint. Decoloration is preferred for consideration according to the invention, but the use of an indicator in which the coloration process forms the basis of the time-temperature clock is also conceivable.

The actual determination of the quality of ageing- or temperature-sensitive products is preceded by the activation of the indicator in Step b). At a later timepoint, the degree of time-or temperature-induced decoloration is then measured and the quality of the product is inferred therefrom. When an evaluation is made with the aid of the human eye, it may be advantageous to arrange e.g. alongside or below the substrate a reference scale which allocates a certain quality grade, a certain timepoint etc. to a certain degree of decoloration.

When the quality of the product is determined by evaluating the degree of decoloration or coloration, it is therefore preferred to use a reference scale.

By means of a reference scale printed with the time-temperature integrator, absolute determination of quality grades is possible. The time-temperature integrator and the reference scale are advantageously arranged on a light-colored substrate in order to facilitate reading.

Suitable substrate materials are both inorganic and organic materials, preferably those known from conventional layer and packaging techniques. There may be mentioned by way of example polymers, glass, metals, paper, cardboard etc.

The substrates are suitable for use as packaging materials for the goods and or for attachment thereto by any method known. It should be understood, that the indicators of the present invention may also be applicable to and used in the food industry, and essentially be similarly effective to other goods that may be used in the pharmaceutical or medical fields.

The substrate can simultaneously form the packaging material for the perishable products or it can be applied to the packaging material, for example in the form of a label.

Another embodiment of the present invention concerns a packaging material or a label that comprises a time-temperature indicator as described above. (Claim 12)

In yet another embodiment, the present invention also relates to a high molecular weight material that comprises at least one spiroaromatic indicator as described above.

The high molecular weight organic material may be of natural or synthetic origin and generally has a molecular weight in the range of from 10³ to 10⁸ g/mol. It may be, for example, a natural resin or a drying oil, rubber or casein, or a modified natural material, such as chlorinated rubber, an oil-modified alkyd resin, viscose, a cellulose ether or ester, such as cellulose acetate, cellulose propionate, cellulose acetobutyrate or nitrocellulose, but especially a totally synthetic organic polymer (thermosetting plastics and thermoplastics), as are obtained by polymerisation, polycondensation or polyaddition, for example polyolefins, such as polyethylene, polypropylene or polyisobutylene, substituted polyolefins, such as polymerisation products of vinyl chloride, vinyl acetate, styrene, acrylonitrile, acrylic acid esters and/or methacrylic acid esters or butadiene, and copolymerisation products of the mentioned monomers, especially ABS or EVA. From the group of the polyaddition resins and polycondensation resins there may be mentioned the condensation products of formaldehyde with phenols, so-called phenoplasts, and the condensation products of formaldehyde with urea, thiourea and melamine, so-called aminoplasts, the polyesters used as surface-coating resins, either saturated, such as alkyd resins, or unsaturated, such as maleic resins, also linear polyesters and polyamides or silicones. The mentioned high moiecular weight compounds may be present individually or in mixtures, in the form of plastic compositions or melts. They may also be present in the form of their monomers or in the polymerised state in dissolved form as film-forming agents or binders for surface-coatings or printing inks, such as boiled linseed oil, nitrocellulose, alkyd resins, melamine resins, ureaformaldehyde resins or acrylic resins.

In order to better understand the present invention and to see how it may be carried out in practice, preferred embodiments will now be described, by way of non-limiting examples.

### Examples

### General Syntheses of monomeric spiropyrans

In a first step a solution of an optionally substituted 2,3,3-trimethylindolenine 1 and a substituted alkylphenyl bromide 2 (preferably substituted benzylbromide) are reacted.

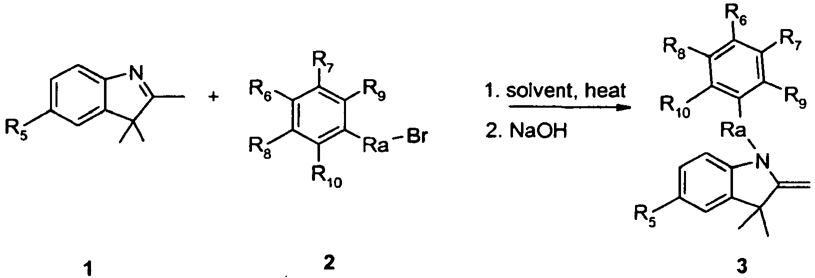

In a separate step a substitued nitrosalicylaldehyde 5 is prepared

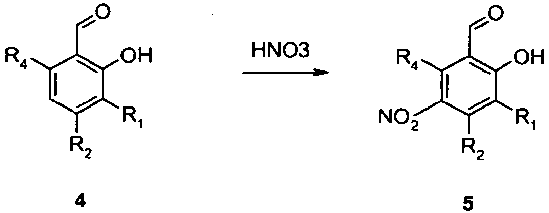

In the next step compound 3 is reacted with compound 5 to obtain

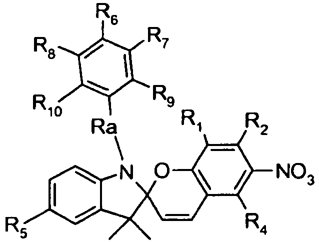

The preparation of some compound is described in detail. All compounds of formula (I) may be prepared in a similar manner.

### 1-(4'-fluorobenzyl)-3,3-dimethyl-2-methylene-indoline (intermediate)

A solution of 2,3,3-trimethylindolenine (5.0 g, 31.4 mmol) and 4-fluorobenzylbromide (3.0 g, 15.7 mmol) in dry toluene 30 ml was stirred overnight at 80-85°C. The mixture was cooled to room temperature, filtered through a glass filter, washed with ether and dried under reduced pressure. The crude product was dissolved in CH₂Cl₂ treated with 5% NaOH_{(aq)} under stirring for 30 minutes. The organic phase was separated, dried over Na₂SO₄, passed through a short alumina column in Hexane-CH₂Cl₂ 50%, evaporated (cooling under nitrogen) giving rise to a corresponding free base, which was immediately dissolved in 10 ml ethanol containing a few drops of Et₃N.

A solution of 1-(4'-fluorobenzyl)-3,3-dimethyl-2-methylene-indoline ((2.7 g, 10.0 mmol) and 2-hydroxy-3-methoxy-5-nitrobenzaldehyde (3.6 g, 13.0 mmol) was refluxed in 25 ml ethanol for 2 h, cooled to room temperature, filtered, triturated with 1% Et3N_{aq}, washed with water, crystallized from ethanol, dried under reduced pressure. Yield: 3.0 g, 66.5 %

### Preparation of compound 142

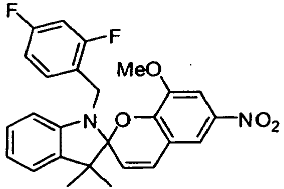

### 1-(2',4'-difluorobenzyl)-3,3-dimethyl-2-methylene-indoline

A solution of 2,3,3-trimethylindolenine (2.5 g, 12.1 mmol) and 2,4 -difluorobenzylbromide (2.1 g, 13.3 mmol) in 15 ml toluene was stirred for 12 h at 90°C under nitrogen, cooled to room temperature, a solid (indolenine hydrobromide) was filtered, washed with ether. Mother liquid was evaporated under reduced pressure; a residue was dissolved in dichloromethane, treated with 5% NaOH under stirring for 30 min. The organic phase was separated, dried over Na₂SO₄, passed through a short alumina column in Hexane-CH₂Cl₂ (1:1), evaporated (cooling under nitrogen). The corresponding free base was immediately dissolved in 10 ml ethanol containing a few drops of Et₃N.

3-methoxy-5-nitrosalicylaldehyde (0.59 g, 3.0 mmol) was added to a solution of 1-(2',4'-difluorobenzyl)-3,3-dimethyl-2-methylene-indoline (1.0g, 2.73 mmol) under stirring, and the reaction mixture was refluxed for 30 min. The reaction mixture was cooled to room temperature, filtered through glass filter; the solid product was washed with ethanol, triturated with 1% Et₃N_{(aq)}, crystallized from ethanol, giving rise to the title compound as a yellowish powder. Yield 0.5 g, 39.4 %

### Preparation of compound 152

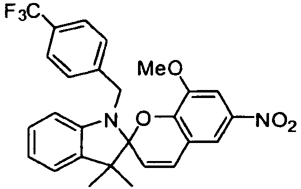

### 1-(4'-trifluoromethyl-benzyl)-3,3-dimethyl-2-methylene-indoline

A solution of 2,3,3-trimethylindolenine (3 g, 12.3 mmol) and 4-(trifluoromethyl)benzyl bromide (2.35 g, 14.8 mmol) was stirred under nitrogen in 20 ml toluene for 24 h at 90°C. The mixture was cooled to room temperature, evaporated under reduced pressure, a residue was dissolved in CH₂Cl₂ and treated with NaOH_{(aq)} 5% for 45 min. The organic phase was separated, dried over Na₂SO₄, chromatographed through a short alumina column in hexane-CH₂Cl₂ (1:1). The solvent was evaporated (cooling under nitrogen), giving rise to 151(2.9 g, 9.1 mmol), as a free base which was immediately dissolved in 45 ml ethanol containing a few drops of Et₃N.

3-methoxy-5-nitrosalicylaldehyde (1.8 g, 9.1 mmol) was added to the solution and the reaction mixture was refluxed for 50 min. The reaction mixture was cooled to room temperature, the solvent was removed under reduced pressure, a residue was chromatographed on a short alumina column, eluent: hexane- CH₂Cl₂ (10-40%). The product was crystallized from ether-hexane, dried *in vacuo.* Yield 1.35g, 19.7%

### Preparation of compound 154

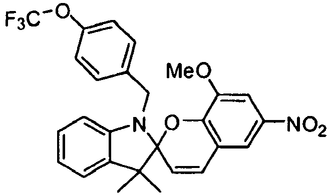

### (1-(4'-trifluoromethoxy-benzyl)-3,3-dimethyl-2-methylene-indoline

A solution of 2,3,3-trimethylindolenine (1.8 g, 11.5 mmol) and 4-(trifluoromethyl)benzyl bromide (2.4 g, 9.6 mmol) was stirred under nitrogen in toluene (20 ml) for 24 h at 90°C. The mixture was cooled to room temperature and evaporated under reduced pressure, the residue was dissolved in CH₂Cl₂ and stirred with NaOH_{(aq)} 5% for 45 min. The organic phase was separated, dried over Na₂SO₄, passed through a short alumina column in hexane-CH₂Cl₂ (1:1). The solvents were evaporated (cooling under nitrogen) to afford the title indoline as a free base (1.27 g, 3.80 mmol),which was immediately dissolved in 45 ml ethanol containing a few drops of Et₃N and subjected to the next step.

3-methoxy-5-nitrosalicylaldehyde (0.79 g, 4.00 mmol) was added to the solution under stirring, and the reaction mixture was refluxed for 30 min. The reaction mixture was cooled to room temperature, evaporated to dryness, purified by column chromatography on alumina, eluent: hexane- CH₂Cl₂ (5-50%). The product was crystallized from ether-hexane. Yield 0.53 g, 27.2%.

### Preparation of compound 258

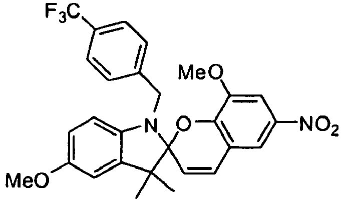

### Preparation of 5-Methoxy-2,3,3-trimethyl-indolenine

A solution of 4-methoxy phenyl-hydrazine hydrochloride (12.0 g, 68.7 mmol) and methyl isopropyl ketone (5.92 g, 7.35 ml, 68.7 mol) in 100 ml of ethanol (abs.) was refluxed for 2h. The mixture was filtrated through a glass filter and the solvent was evaporated. A residue was extracted with dichloromethane, treated with 5% NaOH, dried over NaOH (pellets), passed through alumina pad, evaporated to dryness to give the corresponding indolenine. Yield 12.7 g, (98%). The product was used directly in the following step without further purification.

A solution of 5-methoxy- 2,3,3-trimethyl-indolenine (3.8 g, 20.1 mmol) and 4-trifluoromethyl-benzylbromide (4.8 g, 20.1 mmol) in 20 ml dry toluene was stirred at 80-85 °C overnight, cooled to room temperature, the solvent was removed under reduced pressure, a residue was dissolved in CH₂Cl₂ and stirred with NaOH_{(aq)} 5% for 30 min. The organic phase was separated, dried over Na₂SO₄, passed through a short alumina column in hexane-CH₂Cl₂ (1:1). The solvents were evaporated (cooling under nitrogen), giving rise to a free base 257 (2.8 g, 8.0 mmol), which was immediately dissolved in 40 ml ethanol containing a few drops of Et₃N.

A solution of 3-methoxy-5-nitrosalicylaldehyde (0.9 g, 4.6 mmol) and free base 257 (1.6 g, 4.6 mmol) in ethanol (20 ml) was refluxed for 50 min. The reaction mixture was cooled to room temperature, filtered. A solid product was washed with ethanol, dried on the glass filter, dissolved in dichloromethane, passed through a short alumina column. The solvent was evaporated under reduced pressure and the residue was crystallized from ethanol, dried *in vacuo.* Yield 1.3g, 54.2%

### Stabilization against photobleaching

Samples of the pigment were incorporated in identical water based ink, dispersed using a mill under the same conditions. The ink was printed on the same paper substance and dried at room temperature for 24 hrs. The samples were placed on 5mm glass plates that served as a thermal reservoir and charged using the same light source (TLC lamp 365 nm). Two identical samples were prepared and charged from each ink. One system was placed in the dark at 0C while the other was exposed to filtered light (cutoff filter 455 nm) of a fluorescent lamp ("OSRAM" DULUX S G23, 900 Im, 11 W/840), distance of 30 cm). The samples were measured using a colorimeter (Eye One GretagMacbeth). The CIE Lab values of the charged label that was kept in the dark were compared to the values of an identical label that was exposed to photobleaching light. As is evident from the following graphs,3-methoxy group on the nitrophenyl group consistently reduce the photosensitivity of the colored species. Similarly, the presence of a heavy atom produces the same desired effect.

### Procedures for the ink preparation

### Water based ink composition: 10%TTI

### Step 1. Polymer matrix preparation:

20 g of Glascol® LS-16 (Ciba Specialty Chemicals)
20 g of Glascol® LS-20 (Ciba Specialty Chemicals)
0.25 g of antifoaming agent TEGO® Foamex 845 (Evonic Industries)
0.1 g of triethanolamine (TEA) - stir for 1 min

### Step 2. Final ink composition:

0.2 g of TTI
1.6 g of the **Polymer matrix**
0.4 g of water (HPLC grade)
Disperse on pulverisette (Planetary Fritsch pulverisette 7) 6x5 min at 600 rpm, twice: 6x5 min at 800 rpm to give the 10% TTI ink

### Solvent based ink composition 10%TTI

### Step 1. Polyvinyl butyrate (PVB) varnish preparation

2g Pioloform BN 18 PVB Resin (Ciba Specialty Chemicals)+8 g (10 ml) ethanol (Absolute)
Stir for 2 h to afford a clear solution

### Step 2. Solvent based ink concentrate preparation

0.2 g of TTI
0.5 g of PVB varnish
0.2 g of ethanol (Absolute)
0.1 g of ethyl acetate (AR)
Disperse on pulverisette (2x5 min at 600 rpm) to give an ink concentrate

### Step 3. Final ink preparation

Add to the **ink concentrate**:
   0.6 g of **PVB varnish**
   0.4 g of ethanol (Absolute)
   0.2 g of ethyl acetate (AR)
   Disperse on pulverisette (6x5 min, then twice 6x5 min at 800rpm) to give the 10% TTI ink

### Photobleaching Table O°C

The CIE Lab values of the charged label that was kept in the dark were compared to the values of an identical label that was exposed to photobleaching light.

| Compound | (L² + a² + b²)^{0.5} uncharged | Charging conditions | Time, hrs | (L² + a² + b²)^{0.5} | |
|---|---|---|---|---|---|
| | | | | filter | dark |
| 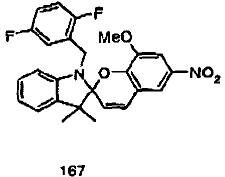 | 91 | 2 min | 0 | 50 | 50 |
| | | *Tube lamp | 25 | 55 | 55 |
| | | 365 nm | 50 | 56 | 56 |
| | | | 75 | 59 | 57 |
| | | | 100 | 65 | 58 |
| | | | 125 | 70 | 60 |
| | | | | | |
| 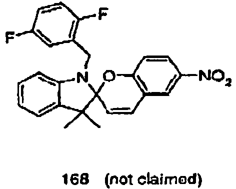 | 92 | 5 min | 0 | 68 | 68 |
| | | Tube lamp | 10 | 63 | 64 |
| | | 365 nm | 25 | 67 | 63 |
| | | | 50 | 72 | 63 |
| | | | 75 | 78 | 63 |
| | | | 100 | 83 | 63 |
| 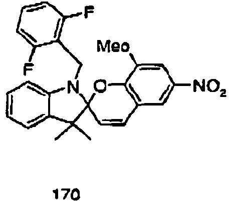 | 92 | 3 min | 0 | 55 | 55 |
| | | Tube lamp | 5 | 56 | 56 |
| | | 365 nm | 25 | 57 | 56 |
| | | | 50 | 62 | 56 |
| | | | | | |
| 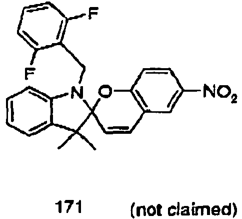 | 93 | 3 m in | 0 | 67 | 67 |
| | | Tube lamp | 5 | 77 | 68 |
| | | 365 nm | 25 | 88 | 70 |
| 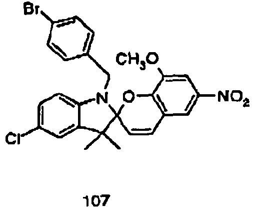 | | 15 sec | 0 | 66 | 66 |
| | | **LED 365 | 20 | 75 | 77 |
| | | | 40 | 76 | 80 |
| | | | 60 | 77 | 81 |
| | | | 120 | 77 | 82 |
| | | | | | |
| 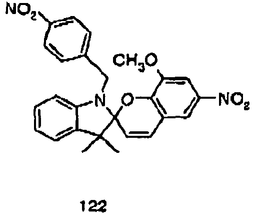 | 95 | 15 sec | 0 | 63 | 63 |
| | | LED 365 | 20 | 72 | 70 |
| | | | 60 | 75 | 71 |
| | | | 90 | 76 | 72 |
| | | | | | |
| 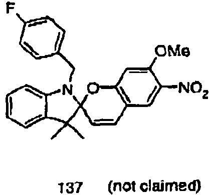 | 94 | 3 min | 0 | 73 | 73 |
| | | Tube lamp | 15 | 85 | 77 |
| | | 365 nm | 30 | 87 | 77 |
| | | | 45 | 88 | 77 |
| | | | 70 | 90 | 77 |
| | | | | | |
| 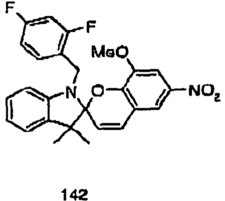 | 90 | 3 min | 0 | 52 | 52 |
| | | Tube lamp | 30 | 56 | 55 |
| | | 365 nm | 50 | 58 | 55 |
| | | | 70 | 62 | 56 |
| | | | 100 | 65 | 57 |
| | | | 120 | 70 | 57 |
| | | | | | |
| 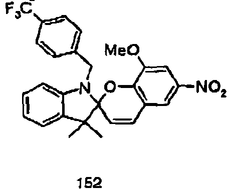 | 90 | 30 sec | 0 | 52 | 52 |
| | | LED 365 | 25 | 55 | 55 |
| | | | 50 | 60 | 57 |
| | | | 75 | 61 | 58 |
| | | | 100 | 65 | 60 |
| | | | 125 | 70 | 60 |
| | | | 150 | 73 | 61 |
| 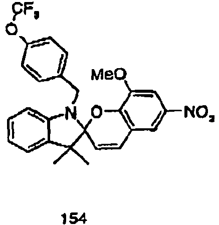 | 87 | 30 sec | 0 | 52 | 52 |
| | | LED 365 | 25 | 52 | 55 |
| | | | 50 | 55 | 58 |
| | | | 75 | 60 | 60 |
| | | | 100 | 61 | 60 |
| | | | 125 | 65 | 61 |
| | | | 150 | 67 | 61 |
| 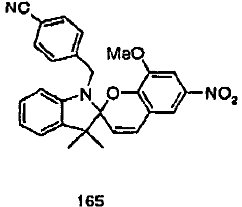 | 95 | 16 sec | 0 | 65 | 65 |
| | | LED 365 | 20 | 71 | 69 |
| | | | 50 | 75 | 71 |
| | | | 90 | 77 | 73 |
| | | | 120 | 78 | 74 |
| | | | 145 | 80 | 75 |
| | | | | | |
| 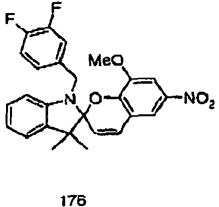 | 92 | 2 m in | 0 | 45 | 45 |
| | | Tube lamp | 10 | 46 | 47 |
| | | 365 nm | 20 | 47 | 49 |
| | | | 30 | 48 | 49 |
| | | | 50 | 53 | 51 |
| | | | 70 | 56 | 51 |
| | | | 90 | 60 | 52 |
| 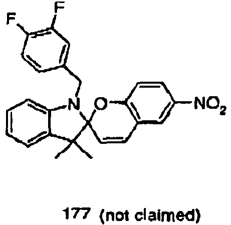 | 90 | 5 min | 0 | 56 | 56 |
| | | Tube lamp | 5 | 52 | 52 |
| | | 365 nm | 25 | 65 | 53 |
| | | | 50 | 65 | 56 |
| | | | 75 | 67 | 60 |
| | | | 100 | 73 | 62 |
| | | | | | |
| 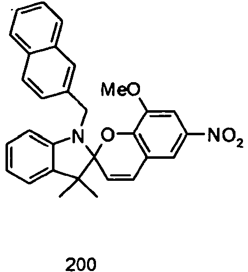 | 90 | 15 sec | 0 | 65 | 65 |
| | | LED 365 | 20 | 72 | 72 |
| | | | 50 | 74 | 76 |
| | | | 75 | 75 | 79 |
| | | | 120 | 76 | 81 |
| | | | 140 | 77 | 82 |
| | | | 160 | 78 | 85 |
| | | | | | |
| 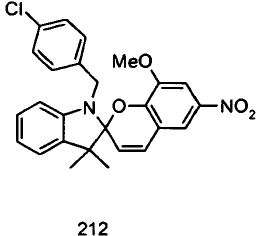 | 92 | 15 sec | 0 | 67 | 67 |
| | | LED 365 | 25 | 70 | 74 |
| | | | 50 | 71 | 77 |
| | | | 75 | 72 | 80 |
| | | | 100 | 73 | 83 |
| | | | 125 | 74 | 85 |
| | | | 175 | 75 | 87 |
| 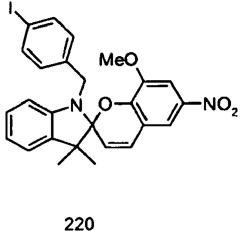 | 92 | 15 sec | 0 | 62 | 62 |
| | | LED 365 | 25 | 58 | 68 |
| | | | 50 | 73 | 70 |
| | | | 100 | 77 | 73 |
| | | | | | |
| 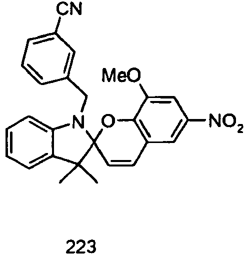 | 93 | 15 sec | 0 | 56 | 56 |
| | | LED 365 | 25 | 62 | 62 |
| | | | 50 | 66 | 64 |
| | | | 75 | 68 | 65 |
| | | | 100 | 69 | 66 |
| | | | 150 | 70 | 67 |
| | | | 175 | 72 | 67 |
| 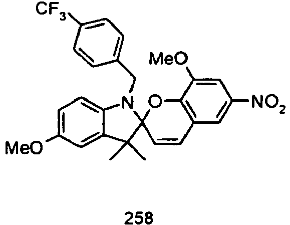 | 77 | 15 sec | 0 | 56 | 56 |
| | | LED 365 | 25 | 56 | 56 |
| | | | 50 | 62 | 56 |
| | | | 75 | 66 | 57 |
| | | | 100 | 70 | 58 |
| | | | 125 | 74 | 61 |
| 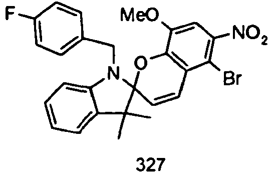 | 91 | 15 sec | 0 | 45 | 45 |
| | | LED 365 | 25 | 550 | 50 |
| | | | 50 | 51 | 57 |
| | | | 100 | 52 | 60 |
| | | | | | |
| 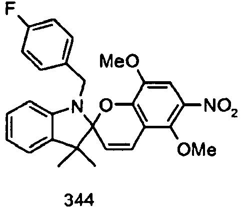 | 92 | 15 sec | 0 | 62 | 62 |
| | | LED 365 | 25 | 75 | 76 |
| | | | 50 | 77 | 82 |
| | | | 75 | 80 | 85 |
| | | | 100 | 81 | 87 |
| | | | 150 | 83 | 89 |
| | | | 175 | 84 | 90 |
| 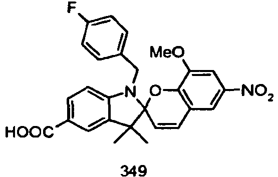 | 93 | 15 sec | 0 | 62 | 62 |
| | | LED 365 | 25 | 65 | 65 |
| | | | 50 | 66 | 66 |
| | | | 75 | 68 | 68 |
| | | | 100 | 69 | 69 |
| | | | 125 | 70 | 70 |
| | | | 150 | 71 | 71 |
| 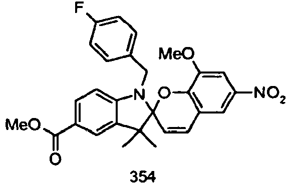 | 93 | 15 sec | 0 | 62 | 62 |
| | | LED 365 | 25 | 73 | 73 |
| | | | 50 | 75 | 74 |
| | | | 75 | 76 | 75 |
| | | | 125 | 80 | 78 |
| | | | 150 | 83 | 83 |
| 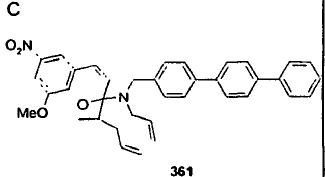 | 85 | 15 sec | 0 | 52 | 52 |
| | | LED 365 | 20 | 51 | 54 |
| | | | 43 | 50 | 54 |
| | | | 66 | 50 | 55 |
| | | | 96 | 50 | 55 |
| | | | 120 | 50 | 55 |
| | | | 163 | 51 | 55 |
| *Laboratory UV tube lamp VL-6.LC (6W -365 nm) ** LED 365 - UV Light Emitting Diode (365 nm) | | | | | |

### Preparation of compound 135

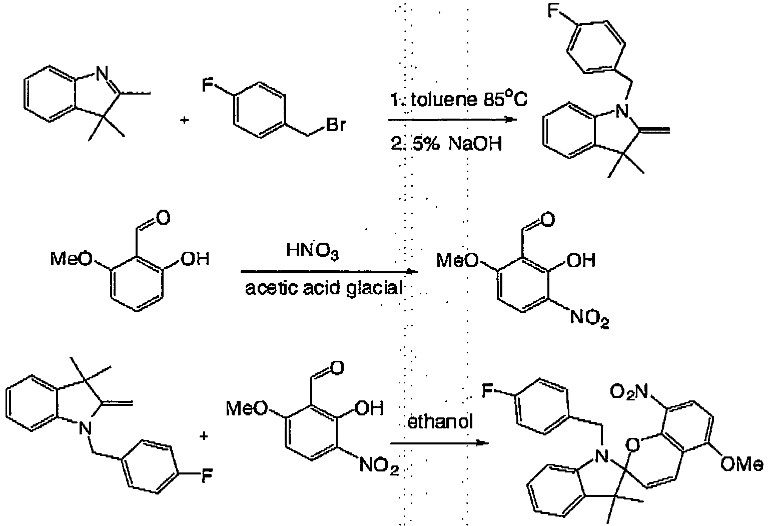

### 1-(4'-fluorobenzyl)-3,3-dimethyl-2-methylene-indoline (62) was prepared as described in the procedure of compound (77) (vide supra).

### 6-methoxy-3-nitrosalicylaldehyde (134)

2-hydroxy-6-methoxy-benzaldehyde (3.0 g, 6.57 mmol) in acetic acid (6 ml) was stirred in an ice bath at 5°C. Fuming nitric acid (10 ml, 15.2 g, 241 eq) was added dropwise at such rate that the temperature did not exceed 10°C. The mixture was stirred for 1 h at 25°C. Then, the solution was poured into ice-water (250 ml) under vigorous stirring. The dark red precipitate formed thereby was filtered through a glass sinter, washed with 1 M HCl (20 ml), dried under reduced pressure, dissolved in CH₂Cl₂, and chromatographed through a silica pad giving rise to 3.8 g of crude yellow product. The product was re-crystallized from ethanol, dried under vacuum. Yield 0.6 g (15.4 %)

### Compound 135

6-methoxy-3-nitrosalicylaldehyde (0.45 g, 2.31 mmol) was added to a solution of 1-(4'-fluorobenzyl)-3,3-dimethyl-2-methylene-indoline (0.6 g, 2.24 mmol) in 15 ml ethanol. The mixture was refluxed for 1.5 h, cooled to room temperature, concentrated under reduced pressure to a 6 ml volume, filtered, washed with ethanol, recrystallized from ethanol. Yield 0.52 g (52.0%).

## Claims

1. A time temperature indicator comprising at least one spiropyran indicator of formula (I) 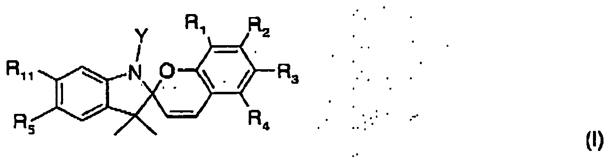 wherein
R₁ is -C₁-C₆ alkoxy, halogen, -C₁-C₆ alkyl or -NO₂;
R₂ is hydrogen or -C₁-C₆ alkoxy;
R₃ is NO₂ or halogen;
R₄ is hydrogen, -C₁-C₆ alkoxy or halogen;
R₅ is hydrogen, halogen, -C₁-C₆ alkoxy, -COOH, -COO-C₁-C₆alkyl. -CF₃ or phenyl;
R₁₁ hydrogen or R₁₁ and R₅ form together a phenyl ring;
Y is phenyl, naphthyl, anthracen-9-yl, 9H-fluoren-9-yl or a residue 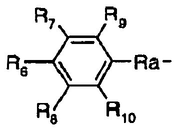 wherein
R₆ is hydrogen, halogen, -C₁-C₆ alkoxy, -NO₂, -CF₃,-O-CF₃, -CN, -COO-C₁-C₆alkyl, phenyl or biphenyl, 9H-fluoren-9-yl,
R₇ is hydrogen, halogen, -CN, -C₁-C₆ alkoxy or R₇ and R₆ form together a phenyl ring;
R₈ is hydrogen, halogen, -CN, or -C₁-C₆ alkoxy;
R₉ is hydrogen or halogen or CN.
R₁₀ is hydrogen or halogen or CN.
Rₐ is -(CH₂)ₙ- with n = 1-6 or -CH₂-CH=CH-
with the proviso that 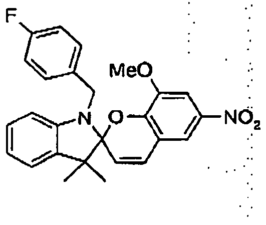 is excluded.

2. A time temperature indicator according to claim 1 comprising at least one spiropyran indicator of formula (I) wherein Y is phenyl, naphthyl, anthracen-9-yl or 9H-fluoren-9-yl .

3. A time temperature indicator according to claim 1 comprising at least one spiropyran indicator of formula (I) wherein Y is a residue

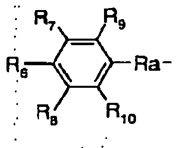

4. A time temperature indicator according to claim 1 comprising at least one spiropyran compound of the formula (III) 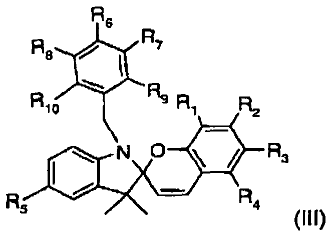 wherein
R₁ is -C₁-C₆ alkoxy, halogen, -C₁-C₆ alkyl or -NO₂;
R₂ is H or -C₁-C₆ alkoxy;
R₃ is NO₂ or halogen;
R₄ is hydrogen, -C₁-C₆ alkoxy or halogen;
R₅ is halogen, -C₁-C₆ alkoxy, -COOH, -COO-C₁-C₆alkyl, -CF₃ or phenyl;
R₆ is hydrogen, halogen, -C₁-C₆ alkoxy, -NO₂, -CF_{3,} -O-CF₃, -CN, -COO-C₁-C₆alkyl, phenyl , biphenyl or 9H-fluoren-9-yl ;
R₇ is hydrogen, halogen, -CN, -C₁-C₆ alkoxy or R₇ and R₆ form together a phenyl ring;
R₈ is hydrogen, halogen, -CN, or -C₁-C₆ alkoxy;
R₉ is hydrogen, halogen, -C₁-C₆ alkoxy, -NO₂, -CF₃, O-CF₃, -CN, -COO-C₁-C₆alkyl, phenyl or biphenyl;
with the proviso that 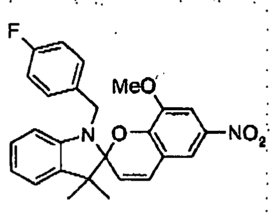 is excluded.

5. A time temperature indicator according to claim 1 comprising at least one spiropyran compound of the formula

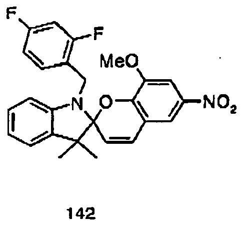

6. A time temperature indicator according to claim 1 comprising at least one spiropyran compound of the formula

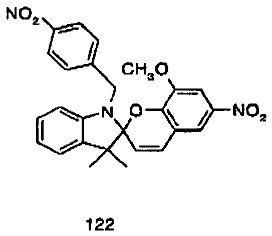

7. A method of manufacturing a time-temperature indicator comprising the steps of
(a) embedding in or atop a matrix the spiropyran indicator of the formula (I), as defined in any one of claims 1-6; and
(b) inducing the formation of a metastable state of said embedded spiropyran indicator.

8. The method of claim 7, further comprising the step of covering the time-temperature indicator with a cover support, designed to avoid photo recharging and/or photo bleaching.

9. A method of time temperature indication comprising the steps of
(a) forming a metastable state of at least one spiroaromatic indicator compound of general formula (I), as defined in any one of claims 1-6; and
(b) adopting the original state of said at least one spiroaromatic indicator compound in a time and temperature dependent manner, wherein the formation of said original state is detected by monitoring a physical characteristic of either said metastable or original state.

10. The method of claim 9, wherein the adoption of said original state is visualized by a change of color based on the color difference between said metastable and original state.

11. A printing ink or printing ink concentrate, comprising at least one spiropyran indicator of the formula (I), as defined in any one of claims 1-6 for manufacturing a time temperature indicator.

12. A packaging material or a label, comprising a time temperature indicator as defined in any one of claims 1-6.

13. A method of determining the quality of ageing- and temperature-sensitive products, which comprises the following steps:
a) printing onto a substrate a time-temperature integrator which comprises at least one spiropyran indicator of the formula (I) as defined in any one of claims 1-6 having photochromic properties based on an isomerization reaction,
b) activating the indicator, preferably by photo-induced coloration
c) optionally applying a protector that prevents renewed photo-induced coloration of the indicator, and
d) determining the degree of time- or temperature-induced decoloration and, taking account of the degree of decoloration, the quality of the product.

14. A method of determining the quality of an ageing- and temperature-sensitive product using a time temperature indicator as defined in any one of claims 1-6.

## Patentansprüche

1. Zeit-Temperatur-Indikator, umfassend mindestens
einen Spiropyran-Indikator der Formel (I) 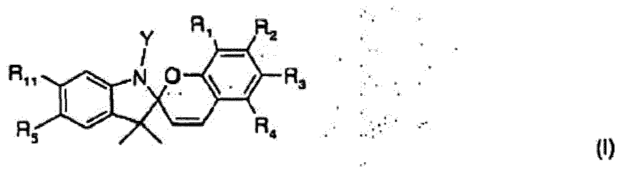 worin
R₁ für -C₁-C₆-Alkoxy, Halogen, -C₁-C₆-Alkyl oder -NO₂ steht;
R₂ für Wasserstoff oder -C₁-C₆-Alkoxy steht;
R₃ für NO₂ oder Halogen steht;
R₄ für Wasserstoff, -C₁-C₆-Alkoxy oder Halogen steht;
R₅ für Wasserstoff, Halogen, -C₁-C₆-Alkoxy, -COOH, -COO-C₁-C₆-Alkyl, -CF₃ oder Phenyl steht;
R₁₁ für Wasserstoff steht oder R₁₁ und R₅ zusammen einen Phenylring bilden;
Y für Phenyl, Naphthyl, Anthracen-9-yl, 9H Fluoren-9-yl oder einen Rest 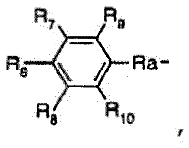 wohin
R₆ für Wasserstoff, Halogen, -C₁-C₆-Alkoxy, -NO₂, -CF₃, -O-CF₃, -CN, -COO-C₁-C₆-Alkyl, Phenyl, Diphenyl oder 9H-Fluoren-9-yl steht;
R₇ für Wasserstoff, Halogen, -CN oder -C₁-C₆-Alkoxy steht oder R₇ und R₆ zusammen einen Phenylring bilden;
R₈ für Wasserstoff, Halogen, -CN oder -C₁-C₆-Alkoxy steht;
R₉ für Wasserstoff, Halogen oder CN steht;
R₁₀ für Wasserstoff, Halogen oder CN steht;
Rₐ für -(CH₂)ₙ- mit n = 1 - 6 oder -CH₂-CH=CH-steht;
steht;
mit der Maßgabe, dass 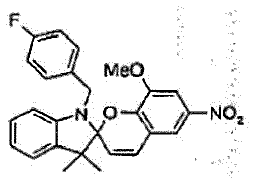 ausgeschlossen ist.

2. Zeit-Temperatur-Indikator nach Anspruch 1, umfassend mindestens einen Y Spiropyran-Indikator der Formel (I), worin Y für Phenyl, Naphthyl, Anthracen-9-yl oder 9H-Fluoren-9-yl steht.

3. Zeit-Temperatur-Indikator nach Anspruch 1, umfassend mindestens einen Spiropyran-Indikator der
Formel (I), worin Y für einen Rest 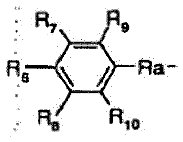 steht.

4. Zeit-Temperatur-Indikator nach Anspruch 1, umfassend mindestens einen Spiropyran-Indikator der Formel (III) 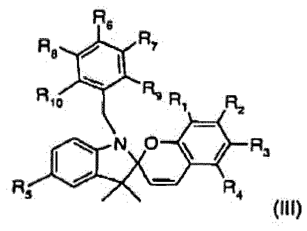 worin
R₁ für -C₁-C₆-Alkoxy, Halogen, -C₁-C₆-Alkyl oder -NO₂ steht;
R₂ für H oder -C₁-C₆-Alkoxy steht;
R₃ für NO₂ oder Halogen steht;
R₄ für Wasserstoffe -C₁-C₆-Alkoxy oder Halogen steht;
R₅ für Halogen, -C₁-C₆-Alkoxy, -COOH, -COO-C₁-C₆-Alkyl, -CF₃ oder Phenyl steht;
R₆ für Wasserstoff, Halogen, -C₁-C₆-Alkoxy, -NO₂, -CF₃, -O-CF₃, -CN, -COO-C₁-C₆-Alkyl, Phenyl, Diphenyl oder 9H-Fluoren-9-yl steht;
R₇ für Wasserstoff, Halogen, -CN oder -C₁-C₆-Alkoxy steht oder R₇ und R₆ zusammen einen Phenylring bildern;
R₈ für Wasserstoff, Halogen, -CN oder -C₁-C₆-Alkoxy steht;
R₉ für Wasserstoff, Halogen, -C₁-C₆-Alkoxy, -NO₂, -CF₃, -O-CF₃, -CN, -COO-C₁-C₆-Alkyl, Phenyl oder Biphenyl steht;
mit der Maßgabe, dass 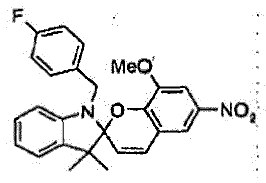 ausgeschlossen ist.

5. Zeit-Temperatur-Indikator nach Anspruch 1, umfassend mindestens eine Spiropyran-verbindung der Formel

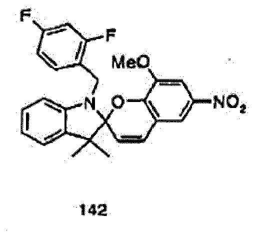

6. Zeit-Temperatur-Indikator nach Anspruch 1, umfas-6. send mindestens eine Spiropyran-Verbindung der Formel

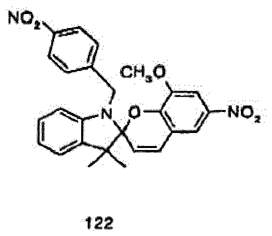

7. Verfahren zur Herstellung eines Zeit-Temperatur-Indikator, das die folgenden Schritte umfasst:
(a) Einbetten des Spiropyran-Indikators der Formel (I) gemäß einem der Ansprüche 1-6 in einer Matrix oder auf einer Matrix und
(b) Induzieren der Bindung eines metastabilen Zustands des eingebetteten Spiropyran-Indikators.

8. Verfahren nach Anspruch 7, bei dem man ferner den Zeit-Temperatur-Indikator mit einem zur Vermeidung von Photowiederaufladung und/oder Photobleichung konzipierten Abdeckungsträger abdeckt.

9. Verfahren zur Zeit-Temperatur-Indikation, das die folgenden Schritte umfasst:
(a) Bilden eines metastabilen Zustands mindestens einer spiroaromatischen Indikatorverbindung der allgemeinen Formel (I) gemäß einem der Ansprüche 1-6 and
(b) Einnehmen des ursprünglichen Zustands der mindestens einen spiroaromatischen Indikatorverbindung in zeit- und temperaturabhängiger Weise, wobei die Bindung des ursprünglichen Zustands durch Überwachung einer physikalischen Eigenschaft des metastabilen oder ursprünglichen Zustands detektiert wind.

10. vorfahren nach Anspruch 9, bei dem das Einnehmen des ursprünglichen Zustands durch eine Farbänderang auf der Basic des Farbunterschieds wischen dem metastabilen und dem ursprünglichen Zustand visualisiert wird.

11. Druckfarbe oder Druckfarbenkonzentrat, umfassend mindestens einen Spiropyran-Indikator der Formel (I) gemäß einem der Ansprüche 1-6, zur Herstellung eines Zeit-Temperatur-Indikators.

12. Verpackungsmaterial oder Etikett, umfassend einem Zeit-Temperatur-Indikator gemäß einem der Ansprüche 1-6.

13. Verfahren zur Bestimmung der Qualität von alterung- und temperaturempfindlichen Produktes, das die folgenden Schritte umfasst:
a) Bedruckten eines Substrats mit einem Zeit-Temperatur-Integrator, der mindestens einen Spiropyran-Indikator der Formel (I) gemäß einem der Ansprüche 1-6 mit photochromen Eignenschaften auf der Basis einer Isomerisierungsreaktion umfasst,
b) Aktivierten des Indikators, vorzugsweise durch photoinduzierte Verfärbung;
c) gegebenenfalls Ausbringen eine schmutzeinrichtung, die eine erneute photoinduzierte Verfärbung des Indikator verhindert, und
d) Bestimmen des Grads der zeigt- oder temperaturinduzierten Entfärbung und der Qualität des Produkts unter Berücksichtigung des Entfärbungsgrads.

14. Verfahren zur Bestimmung der Qualität eines alterungs- und temperaturempfindlichen Produkts unter Verwerdung eines Zeit-Temperatur-Indikators gemäß einem der Ansprüche 1-6.

## Revendications

1. Indicateur temps-température comprenant au moins un indicateur à base de spiropyranne de formule (I) 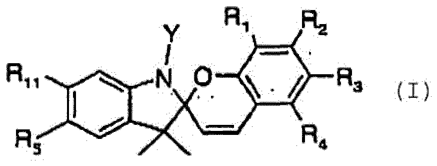 dans laquelle
R₁ est -C₁-C₆alcoxy, halogène, -C₁-C₆alkyle ou -NO₂; R₂ est hydrogène ou -C₁-C₆alcoxy ;
R₃ est NO₂ ou halogène ;
R₄ est hydrogène, -C₁-C₆alcoxy ou halogène ;
R₅ est hydrogène, halogène, -C₁-C₆alcoxy, -COOH, -COO-C₁-C₆alkyle, -CF₃ ou phényle ;
R₁₁ est hydrogène ou R₁₁ et R₅ forment ensemble un cycle phényle ;
Y est phényle, naphtyle, anthracén-9-yle, 9H-fluorén-9-yle ou un reste 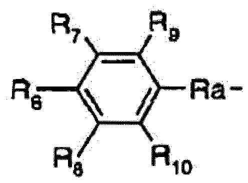 où R₆ est hydrogène, halogène, -C₁-C₆alcoxy, -NO₂, -CF₃, -O-CF₃, -CN, -COO-C₁-C₆alkyle, phényle, biphényle ou 9H-fluorén-9-yle ;
R₇ est hydrogène, halogène, -CN, -C₁-C₆alcoxy ou R₇ et R₆ forment ensemble un cycle phényle ;
R₈ est hydrogène, halogène, -CN, ou -C₁-C₆alcoxy ;
R₉ est hydrogène ou halogène ou CN ;
R₁₀ est hydrogène ou halogène ou CN ;
Rₐ est -(CH₂)ₙ- avec n=1-6 ou -CH₂-CH=CH-
à condition que 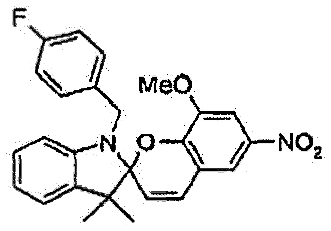 soit exclu.

2. Indicateur temps-température selon la revendication 1, comprenant au moins un indicateur à base de spiropyranne de formule (I), dans laquelle Y est phényle, naphtyle, anthracén-9-yle ou 9H-fluorén-9-yle.

3. Indicateur temps-température selon la revendications 1, comprenant au moins une indicateur à base de spiropyranne de formule (I), dans laquelle Y est un reste

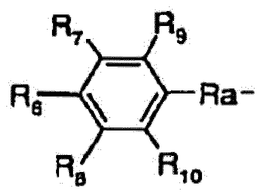

4. Indicateur temps-température selon la revendication 1, comprenant au moins un composé de spiropyranne de formule (III) 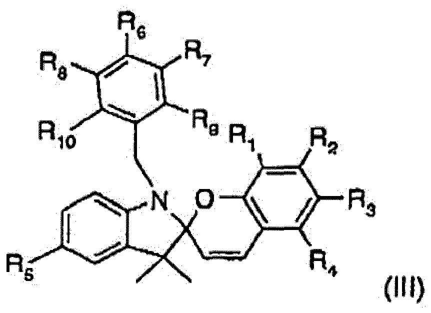 dans laquelle
R₁ est -C₁-C₆alcoxy, halogène, -C₁-C₆alkyle ou -NO₂ ;
R₂ est H ou -C₁-C₆alcoxy ;
R₃ est NO₂ ou halogène ;
R₄ est hydrogène, -C₁-C₆alcoxy ou halogène
R₅ est halogène, -C₁-C₆alcoxy, -COOH, -COO-C₁-C₆alkyle, -CF₃ ou phényle ;
R₆ est hydrogène, halogène, -C₁-C₆alcoxy, -NO₂, -CF₃, -O-CF₃, -CN, -COO-C₁-C₆alkyle, phényle, biphényle ou 9H-fluorén-9-yle ;
R₇ est hydrogène, halogène, -CN, -C₁-C₆alcoxy ou R₇ et R₆ forment ensemble un cycle phényle ;
R₈ est hydrogène, halogène, -CN, ou -C₁-C₆alcoxy
R₉ est hydrogène, halogène, -C₁-C₆alcoxy, -NO₂, -CF₃, -O-CF₃, -CN, -COO-C₁-C₆alkyle, phényle ou biphényle ; à condition que 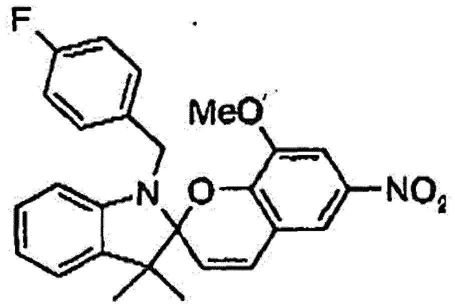 soit exclu.

5. Indicateur temps-température selon la revendication 1, comprenant au moins un composé de spiropyranne de formule

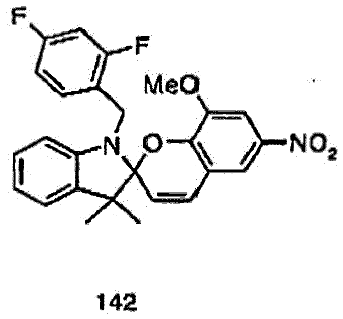

6. Indicateur temps-température selon la revendication 1, comprenant au moins un composé de spiropyranne de formule

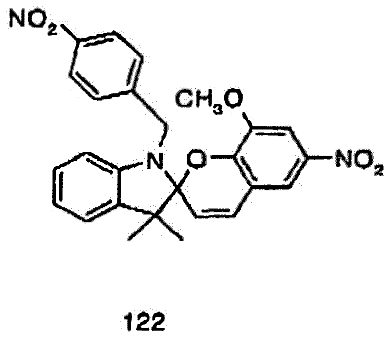

7. Méthode de fabrication d'un indicateur temps-température, comprenant les étapes consistant à :
(a) inclure dans ou sur une matrice, l'indicateur à base de spiropyranne de formule (I) tel que défini selon l'une quelconque des revendications 1-6 ; et
(b) induire la formation d'un état métastable dudit indicateur à base de spiropyranne inclus.

8. Méthode selon la revendications 7, comprenant en outre l'étape consistant à recouvrir l'indicateur temps-température d'un support de couverture, conçu pouf éviter une photo-recharge et/ou un photo-blanchiment.

9. Méthode d'indication de temps-température, comprenant les étapes consistant à :
(a) former un état métastable d'au moins un composé indicateur spiroaromatique de formule générale (I) sel que défini selon l'une quelconque des revendications 1-6 ; et
(b) adopter l'état d'origine dudit au moins une composé indicateur spiroaromatique de manière dépendant du temps et de la température, où la formation dudit état d'origine est détectée par le suivi d'une caractéristique phasique dudit état d'origine ou bien métastable.

10. Méthode selon la revendications 9, dans laquelle l'adoption dudit état d'origine est visualisée par un changement de couleur basé sur la différence de couleur entre ledit état d'origine et métastable.

11. Encre d'impression ou concentré d'encre d'impression, comprenant au moins un indicateur à base de spiropyranne de formule (I) tel que défini selon l'une quelconque des revendications 1-6, pour la fabrication d'un indicateur temps-température.

12. Matériau d'emballage ou étiquette, comprenant un indicateur temps-température sel que défini selon l'une quelconque des revendications 1-6.

13. Méthode de détermination de la qualité de produis sensibles au vieillissement et à la température, comprenant les étapes suivantes :
(a) l'impression sur un substrat d'un intégrateur temps-température comprenant au moins un indicateur à base de spiropyranne de formule (I) tel que défini selon l'une quelconque des revendications 1-6, ayant des propriétés photochromiques basées sur une réaction d'isomérisation ;
(b) l'activation de l'indicateur, préférablement par coloration photo-induite ;
(c) l'application éventuelle d'un protecteur qui empêche une coloration photo-induite renouvelée de l'indicateur ; et
(d) la détermination du degré de décoloration induite par le temps ou la température, et, en prenant en compte le degré de décoloration, de la qualité du produis.

14. Méthode de détermination de la qualité d'un produit sensible au vieillissement et à la température, à l'aide d'un indicateur temps-température tel que défini selon l'une quelconque des revendications 1-6.
